(19) Europäisches Patentamt
European Patent Office
Office européen des brevets

(11) EP 3 168 901 B1

(12) **EUROPEAN PATENT SPECIFICATION**

(45) Date of publication and mention of the grant of the patent:
**09.01.2019 Bulletin 2019/02**

(51) Int Cl.:
***H01M 2/16*** $^{(2006.01)}$ ***H01M 10/0525*** $^{(2010.01)}$

(21) Application number: **16198486.9**

(22) Date of filing: **11.11.2016**

(54) **POROUS LAYER FOR NONAQUEOUS ELECTROLYTE SECONDARY BATTERY SEPARATOR, AND NONAQUEOUS ELECTROLYTE SECONDARY BATTERY LAMINATED SEPARATOR**

PORÖSE SCHICHT FÜR SEPARATOR EINER SEKUNDÄRBATTERIE MIT WASSERFREIEM ELEKTROLYT UND LAMINIERTER SEPARATOR FÜR SEKUNDÄRBATTERIE MIT WASSERFREIEM ELEKTROLYT

COUCHE POREUSE POUR SÉPARATEUR DE BATTERIE SECONDAIRE À ÉLECTROLYTE NON AQUEUX ET SÉPARATEUR STRATIFIÉ DE BATTERIE SECONDAIRE À ÉLECTROLYTE NON AQUEUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.11.2015 JP 2015223429**

(43) Date of publication of application:
**17.05.2017 Bulletin 2017/20**

(73) Proprietor: **Sumitomo Chemical Company Limited**
**Tokyo 104-8260 (JP)**

(72) Inventors:
- **Suzuki, Junji**
  **Ehime, 792-0015 (JP)**
- **Hashiwaki, Hiroki**
  **Ehime, 792-0015 (JP)**
- **Sugiyama, Takayuki**
  **Ibaraki, 300-3294 (JP)**

(74) Representative: **Vossius & Partner**
**Patentanwälte Rechtsanwälte mbB**
**Siebertstrasse 3**
**81675 München (DE)**

(56) References cited:
**EP-A1- 1 245 621** **US-A- 5 856 426**
**US-A1- 2006 019 110** **US-A1- 2014 370 358**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 168 901 B1

## Description

### Technical Field

The present invention relates to (i) a porous layer for a separator for a nonaqueous electrolyte secondary battery (hereinafter referred to as "nonaqueous electrolyte secondary battery separator") and (ii) a laminated separator for a nonaqueous electrolyte secondary battery" (hereinafter referred to as "nonaqueous electrolyte secondary battery laminated separator").

### Background Art

Nonaqueous electrolyte secondary batteries, particularly lithium ion secondary batteries, have a high energy density and are thus in wide use as batteries for personal computers, mobile telephones, portable information terminals, and the like. Such nonaqueous electrolyte secondary batteries have recently been developed as on-vehicle batteries.

As a member of such a nonaqueous electrolyte secondary battery, separators having excellent heat resistance are being developed.

For example, Patent Literature 1 discloses a nonaqueous electrolyte secondary battery laminated separator which serves as a nonaqueous electrolyte secondary battery separator having excellent heat resistance and which is a laminated body including (i) a polyolefin microporous film and (ii) a porous layer that is provided on the microporous film and that contains an aramid resin which is a heat-resistant resin.

Patent Literature 2 discloses a nonaqueous electrolyte secondary battery laminated separator which is a laminated body including (i) a polyolefin microporous film and (ii) a porous layer that (a) is provided on the microporous film and (b) contains a heat-resistant resin and a filler made of ceramic powder. Patent Literature 2 also discloses that since the porous layer contains the filler made of ceramic powder, a battery including the separator improves in terms of battery characteristics.

### Citation List

[Patent Literature]

[Patent Literature 1] Japanese Patent Application Publication Tokukai No. 2001-23602 (Publication date: January 26, 2001)

[Patent Literature 2] Japanese Patent Application Publication Tokukai No. 2000-30686 (Publication date: January 28, 2000)

### Summary of Invention

### Technical Problem

With a nonaqueous electrolyte secondary battery laminated separator such as the above-described nonaqueous electrolyte secondary battery laminated separator including a porous layer containing an aramid resin (heat-resistant resin) and the above-described nonaqueous electrolyte secondary battery laminated separator including a porous layer containing an aramid resin and a filler, heat resistance is sufficient. However, higher ion transmittance is demanded.

### Solution to Problem

The inventors arrived at the present invention by finding that not only excellent heat resistance but also excellent ion permeability can be achieved by a nonaqueous electrolyte secondary battery separator including a porous layer which is a mixture including: a nitrogen-containing aromatic polymer A that is a heat-resistant resin; and an aromatic polymer B differing in structural unit from the nitrogen-containing aromatic polymer A.

The present invention encompasses a nonaqueous electrolyte secondary battery laminated separator, a member for a nonaqueous electrolyte secondary battery (hereinafter referred to as "nonaqueous electrolyte secondary battery member"), and a nonaqueous electrolyte secondary battery, each of which will be described below.

A porous layer which is used in the present invention includes: a nitrogen-containing aromatic polymer A; and an aromatic polymer B differing in structural unit from the nitrogen-containing aromatic polymer A.

An amount of the aromatic polymer B contained in the porous layer used in the present invention relative to 100 parts

by weight of the nitrogen-containing aromatic polymer A contained in the porous layer is 5 parts by weight to 2000 parts by weight, and preferably 10 parts by weight to 1000 parts by weight.

The porous layer is preferably configured so that the nitrogen-containing aromatic polymer A is an aromatic polyamide resin.

The porous layer
is preferably configured so that the aromatic polymer B is at least one selected from the group consisting of an aromatic polyamide, an aromatic polyimide, an aromatic polyamide imide, and an aromatic polyester.

The porous layer
is preferably configured so that at least one of the nitrogen-containing aromatic polymer A and the aromatic polymer B is a wholly aromatic polymer.

The porous layer
is preferably configured to further include: a filler.

A nonaqueous electrolyte secondary battery laminated separator in accordance with an embodiment of the present invention includes: a porous base material containing a polyolefin-based resin as a main component; and a porous layer as described herein the porous layer being disposed on at least one surface of the porous base material.

A nonaqueous electrolyte secondary battery member in accordance with an embodiment of the present invention includes: a cathode; a porous layer as described herein;
and an anode, the cathode, the porous layer, and the anode being arranged in this order.

A nonaqueous electrolyte secondary battery in accordance with an embodiment of the present invention includes: a porous layer as described herein.

Advantageous Effects of Invention

A separator including a porous layer
as described herein and a nonaqueous electrolyte secondary battery laminated separator in accordance with an embodiment of the present invention each have high heat resistance. This allows the separator and the laminated separator each to have excellent ion permeability while stability at a high temperature is achieved.

Description of Embodiments

The following description will discuss an embodiment of the present invention in detail. Note that "A to B" herein means "equal to or greater than A, and equal to or less than B".

[Porous layer]

A porous layer used in the present invention is a porous layer for a nonaqueous electrolyte secondary battery separator, the porous layer including: a nitrogen-containing aromatic polymer A; and an aromatic polymer B differing in structural unit from the nitrogen-containing aromatic polymer A. An amount of the aromatic polymer B contained in the porous layer used in the present invention relative to 100 parts by weight of the nitrogen-containing aromatic polymer A contained in the porous layer is 5 parts by weight to 2000 parts by weight, and preferably 10 parts by weight to 1000 parts by weight. The porous layer is provided on a base material of the nonaqueous electrolyte secondary battery separator, and can be a member of a nonaqueous electrolyte secondary battery laminated separator. In case where the porous layer is provided on an electrode, the porous layer can be a nonaqueous electrolyte secondary battery separator.

Since the porous layer
includes the nitrogen-containing aromatic polymer A and the aromatic polymer B differing in structural unit from the nitrogen-containing aromatic polymer A, the porous layer has not only excellent heat resistance but also excellent ion permeability.

A weight of the nitrogen-containing aromatic polymer A and the aromatic polymer B combined is ordinarily equal to or greater than 5 weight%, and preferably equal to or greater than 10 weight%, relative to a total weight of the porous layer.

A weight of the nitrogen-containing aromatic polymer A and the aromatic polymer B combined is ordinarily equal to or greater than 50 weight%, preferably equal to or greater than 80 weight%, more preferably equal to or greater than 90 weight%, and still more preferably equal to or greater than 95 weight%, relative to a total weight of a resin (not including a filler) of the porous layer.

<Nitrogen-containing aromatic polymer A>

The nitrogen-containing aromatic polymer A contained in the porous layer

is a heat-resistant resin. Examples of the nitrogen-containing aromatic polymer A encompass: aromatic polyamides such as wholly aromatic polyamide (aramid resin) and semi-aromatic polyamide; aromatic polyimide; aromatic polyamide imide; polybenzimidazole; polyurethane; and melamine resin. Among these, wholly aromatic polyamide is preferable. Examples of wholly aromatic polyamide encompass para-aramid and meta-aramid. Among these, para-aramid is preferable. The nitrogen-containing aromatic polymer A can be a polymer of a single kind, or can be a mixture of two or more kinds of polymers.

Examples of a method of preparing the para-aramid encompass, but are not particularly limited to, condensation polymerization of para-oriented aromatic diamine and para-oriented aromatic dicarboxylic acid halide. In such a case, para-aramid to be obtained substantially includes repeating units in which amide bonds are bonded at para positions or corresponding oriented positions (for example, oriented positions that extend coaxially or parallel in opposite directions such as the cases of 4,4'-biphenylene, 1,5-naphthalene, and 2,6-naphthalene) of aromatic rings. Specific examples of the para-aramid encompass para-aramids each having a para-oriented structure or a structure corresponding to a para-oriented structure, such as poly(paraphenylene terephthalamide), poly(parabenzamide), poly(4,4'-benzanilide terephthalamide), poly(paraphenylene-4,4'-biphenylene dicarboxylic acid amide), poly(paraphenylene-2,6-naphthalene dicarboxylic acid amide), poly(2-chloro-paraphenylene terephthalamide), and paraphenylene terephthalamide/2,6-dichloroparaphenylene terephthalamide copolymer.

The para-aramid can be poly(paraphenylene terephthalamide) (hereinafter referred to as "PPTA"). A solution of the poly(paraphenylene terephthalamide) can be prepared by, for example, the following specific steps (1) through (4).

(1) N-methyl-2-pyrrolidone (hereinafter also referred to as "NMP") is introduced into a flask which is dried. Then, calcium chloride, which has been dried at 200°C for 2 hours, is added. Then, the flask was heated to 100°C to completely dissolve the calcium chloride.

(2) A temperature of the solution obtained in the step (1) is returned to room temperature, and then paraphenylenediamine (hereinafter abbreviated as "PPD") is added. Then, the PPD is completely dissolved.

(3) While a temperature of the solution obtained in the step (2) is maintained at 20±2°C, terephthalic acid dichloride (hereinafter referred to as "TPC") was added in ten separate portions at approximately 5-minute intervals.

(4) While a temperature of the solution obtained in the step (3) is maintained at 20±2°C, the solution was matured for 1 hour, and was then stirred under reduced pressure for 30 minutes to eliminate air bubbles, so that the solution of the PPTA is obtained.

<Aromatic polymer B>

The aromatic polymer B, which is contained in the porous layer,
has a structural unit different from that of the nitrogen-containing aromatic polymer A. That is, the aromatic polymer B is an aromatic polymer different from the nitrogen-containing aromatic polymer A.

Examples of the aromatic polymer B encompass aromatic polyamide, aromatic polyimide, aromatic polyamide imide, aromatic polyester, polycarbonate, polyacetal, polysulfone, polyether ether ketone, and polyether sulfone. Among these, aromatic polyamide, aromatic polyimide, aromatic polyamide imide, and aromatic polyester are preferable. Among these, aromatic polyester is more preferable. The aromatic polymer B is still more preferably wholly aromatic polyester. The aromatic polymer B can be a polymer of a single kind, or can be a mixture of two or more kinds of polymers.

Common names of aromatic polymers herein described as a nitrogen-containing aromatic polymer A and an aromatic polymer B each indicate a main binding type of the aromatic polymer. For example, in a case where an aromatic polymer in accordance with an embodiment of the present invention is an aromatic polymer referred to as "aromatic polyester", "aromatic polyester" indicates that equal to or greater than 50% of bonds constituting a main chain in molecules of the aromatic polymer are ester bonds. Note, however, that the aromatic polymer referred to as "aromatic polyester" can contain, in bonds constituting a main chain, bonds other than ester bonds (such as amide bonds and imide bonds).

Examples of aromatic polyamide serving as an aromatic polymer B encompass meta-aramid, nylon 6T, nylon 61, nylon 8T, nylon 10T, denatured meta-aramid, denatured nylon 6T, denatured nylon 61, denatured nylon 8T, denatured nylon 10T, and copolymers of these.

The aromatic polyimide serving as an aromatic polymer B is preferably a wholly aromatic polyimide prepared through condensation polymerization of an aromatic dianhydride and an aromatic diamine. Specific examples of the dianhydride encompass pyromellitic dianhydride, 3,3',4,4'-diphenyl sulfone tetracarboxylic dianhydride, 3,3',4,4'-benzophenone tetracarboxylic dianhydride, 2,2'-bis(3,4-dicarboxyphenyl)hexafluoropropane, and 3,3',4,4'-biphenyl tetracarboxylic dianhydride. Specific examples of the diamine encompass, but are not limited to, oxydianiline, paraphenylenediamine, benzophenone diamine, 3,3'-methylenedianiline, 3,3'-diaminobenzophenone, 3,3'-diaminodiphenyl sulfone, and 1,5'-naphthalene diamine. In an embodiment of the present invention, it is possible to suitably use any polyimide which is soluble in a solvent. Examples of such a polyimide encompass a polyimide which is a polymerization condensate obtained from 3,3',4,4'-diphenyl sulfone tetracarboxylic dianhydride and aromatic diamine.

The aromatic polyamide imide serving as an aromatic polymer B is, for example, produced through condensation polymerization of (i) aromatic dicarboxylic acid and aromatic diisocyanate or (ii) aromatic dianhydride and aromatic diisocyanate. Specific examples of the aromatic dicarboxylic acid encompass isophthalic acid and terephthalic acid. Specific examples of the aromatic dianhydride encompass trimellitic anhydride. Specific examples of the aromatic diisocyanate encompass 4,4'-diphenylmethane diisocyanate, 2,4-tolylene diisocyanate, 2,6-tolylene diisocyanate, ortho tolylene diisocyanate, and m-xylene diisocyanate.

The aromatic polyester serving as an aromatic polymer B is preferably wholly aromatic polyester. Examples of the wholly aromatic polyester encompass the following polyesters:

(1) A polymer obtained by polymerizing an aromatic hydroxycarboxylic acid, an aromatic dicarboxylic acid, and an aromatic diol;
(2) A polymer obtained by polymerizing aromatic hydroxycarboxylic acids of identical type or differing types;
(3) A polymer obtained by polymerizing an aromatic dicarboxylic acid and an aromatic diol;
(4) A polymer obtained by polymerizing (i) an aromatic hydroxycarboxylic acid, (ii) an aromatic dicarboxylic acid, and (iii) an aromatic amine having a phenolic hydroxide group;
(5) A polymer obtained by polymerizing (i) an aromatic dicarboxylic acid and (ii) an aromatic amine having a phenolic hydroxide group; and
(6) A polymer obtained by polymerizing an aromatic hydroxycarboxylic acid, an aromatic dicarboxylic acid, and an aromatic diamine.

Among the above wholly aromatic polyesters, the wholly aromatic polyesters (4), (5) or (6) are preferable in view of heat resistance of (i) a porous layer to be obtained and (ii) a separator including the porous layer.

Note that instead of using an aromatic hydroxycarboxylic acid, aromatic dicarboxylic acid, an aromatic diol, and an aromatic amine having a phenolic hydroxide group, it is possible to use ester-forming derivatives of these or amide-forming derivative of these.

Examples of the ester-forming derivatives of carboxylic acids and amide-forming derivatives of carboxylic acids encompass (i) compounds, such as an acid chloride and an acid anhydride, in each of which a carboxyl group is a highly reactive derivative so that a polyester formation reaction or a polyamide formation reaction is promoted and (ii) compounds in each of which an ester or an amide is formed by a carboxyl group and alcohols, an ethylene glycol, or an amine, any of which generates a polyester or a polyamide by an ester exchange reaction or an amide exchange reaction, respectively.

Examples of the ester-forming derivative of the phenolic hydroxide group encompass a compound in which an ester is formed by a phenolic hydroxide group and carboxylic acids so as to generate polyester by an ester exchange reaction.

Examples of an amide-forming derivative of an amino group encompass a compound in which an amide is formed by an amino group and carboxylic acids so as to generate polyamide by an amide exchange reaction.

Alternatively, the aromatic hydroxycarboxylic acid, the aromatic dicarboxylic acid, the aromatic diol, the aromatic amine having a phenolic hydroxide group, and the aromatic diamine can each be substituted by an alkyl group such as a methyl group or an ethyl group or by an aryl group such as a phenyl group, provided that an ester forming property or an amide forming property is not impaired.

Examples of a repeating structural unit of the wholly aromatic polyester encompass, but are not limited to, the following repeating structural units.

A repeating structural unit derived from an aromatic hydroxycarboxylic acid:

[Chem. 1]

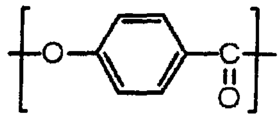
($A_1$)

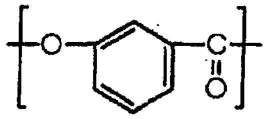
($A_2$)

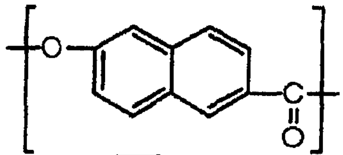
($A_3$)

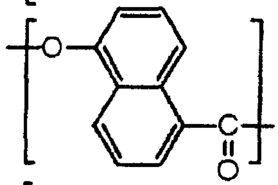
($A_4$)

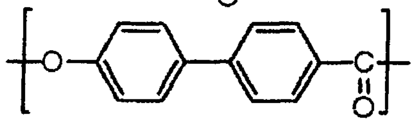
($A_5$)

The above repeating structural unit can be substituted by an alkyl group or an aryl group.

A repeating structural unit derived from an aromatic dicarboxylic acid:

[Chem. 2]

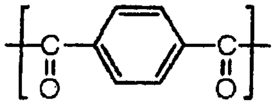 (B1)

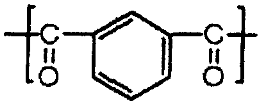 (B2)

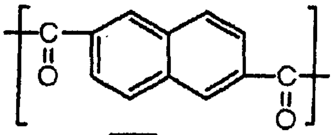 (B3)

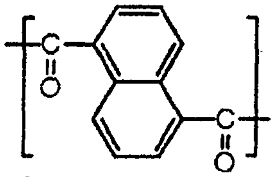 (B4)

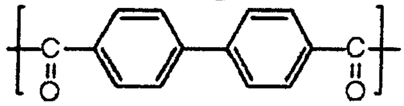 (B5)

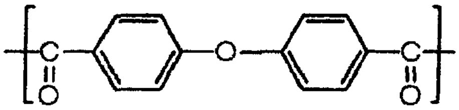 (B6)

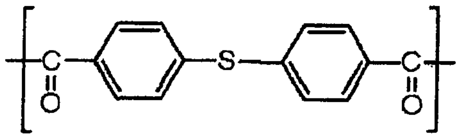 (B7)

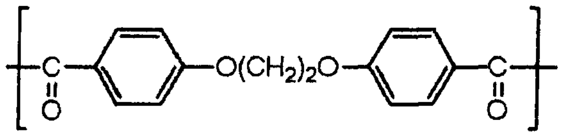 (B8)

The above repeating structural unit can be substituted by an alkyl group or an aryl group.

A repeating structural unit derived from an aromatic diol:

[Chem. 3]

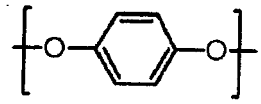

($C_1$)

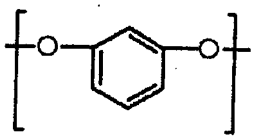

($C_2$)

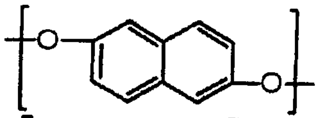

($C_3$)

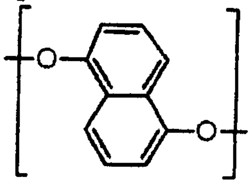

($C_4$)

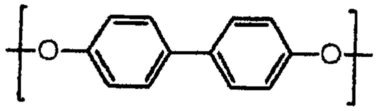

($C_5$)

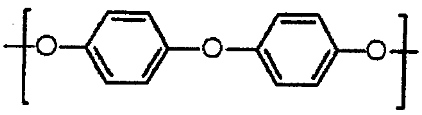

($C_6$)

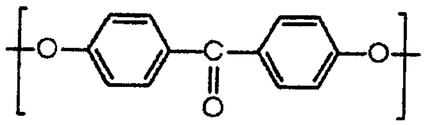

($C_7$)

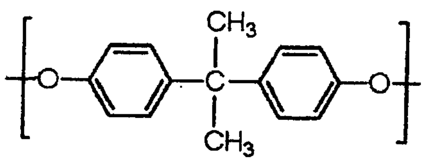

($C_8$)

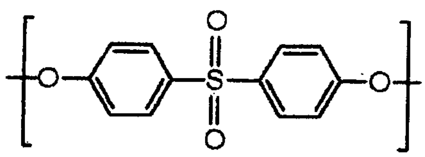

($C_9$)

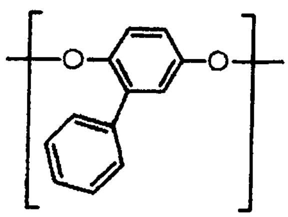

($C_{10}$)

The above repeating structural unit can be substituted by an alkyl group or an aryl group.

A repeating structural unit derived from an aromatic amine having a phenolic hydroxide group:

[Chem. 4]

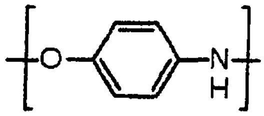

(D1)

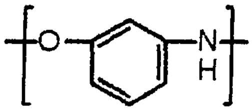

(D2)

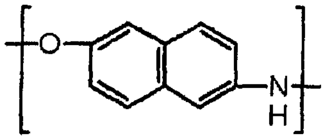

(D3)

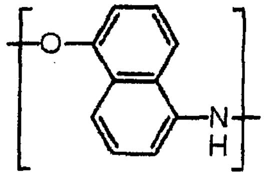

(D4)

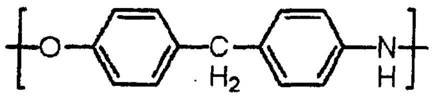

(D5)

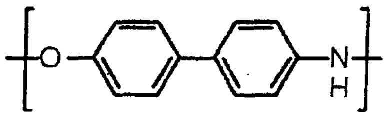

(D6)

The above repeating structural unit can be substituted by an alkyl group or an aryl group. All or part of hydrogen atoms binding to nitrogen atoms can be substituted by an alkyl group or an acyl group.

A repeating structural unit derived from an aromatic diamine:

[Chem. 5]

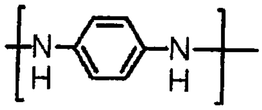
$(E_1)$

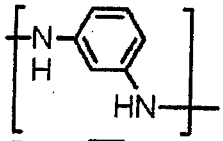
$(E_2)$

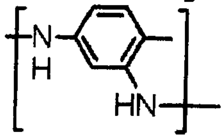
$(E_3)$

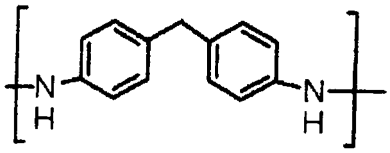
$(E_4)$

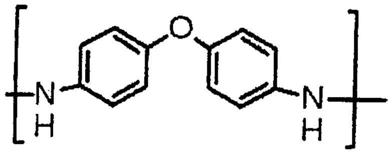
$(E_5)$

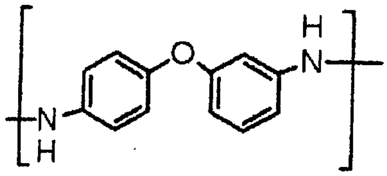
$(E_6)$

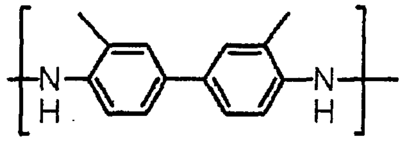
(E7)

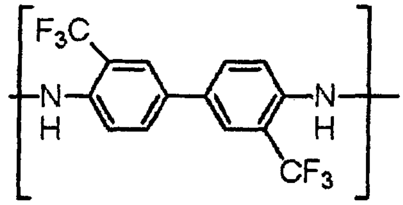
(E8)

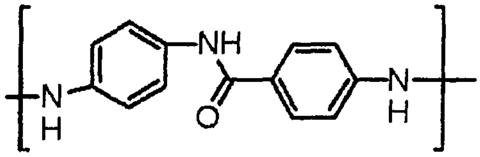
(E9)

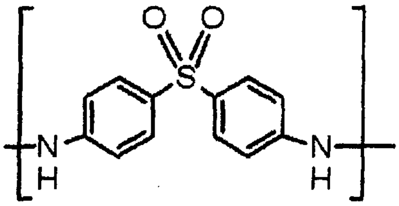
(E10)

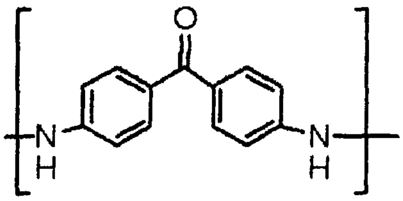
(E11)

The above repeating structural unit can be substituted by an alkyl group or an aryl group.

Ordinarily, the alkyl group, by which the repeating structural unit can be substituted, is, for example, a C1-10 alkyl group which is preferably a methyl group, an ethyl group, a propyl group, or a butyl group. Ordinarily, the aryl group, by which the repeating structural unit can be substituted, is, for example, a C6-20 aryl group which is preferably a phenyl group. All or part of hydrogen atoms binding to nitrogen atoms can be substituted by an alkyl group or an acyl group.

In order to further increase heat resistance of the laminated porous film (laminated separator) in accordance with an embodiment of the present invention, the wholly aromatic polyester preferably contains a repeating unit represented by the above formula ($A_1$), ($A_3$), ($B_1$), ($B_2$) or ($B_3$).

Examples of a preferable combination of the repeating structural units encompass the following combinations (a) through (d):

(a):

a combination of the repeating structural units ($A_1$), ($B_2$), and ($D_1$),
a combination of the repeating structural units ($A_3$), ($B_2$), and ($D_1$),
a combination of the repeating structural units ($A_1$), ($B_1$), ($B_2$), and ($D_1$),
a combination of the repeating structural units ($A_3$), ($B_1$), ($B_2$), and ($D_1$),
a combination of the repeating structural units ($A_3$), ($B_3$), and ($D_1$), or
a combination of the repeating structural units ($B_1$), ($B_2$) or ($B_3$), and ($D_1$).

(b):
a combination in which all or part of ($D_1$) in the combination (a) is substituted by ($D_2$).
(c):
a combination in which part of ($A_1$) in the combination (a) is substituted by ($A_3$).
(d):
a combination in which all or part of ($D_1$) in the combination (a) is substituted by ($C_1$) or ($C_3$).
(e):

a combination in which all or part of ($D_1$) in the combination (a) is substituted by ($E_1$) or ($E_5$).

Examples of a more preferable combination encompass (i) a repeating structural unit, in an amount of 10 mol% to 50 mol%, derived from at least one compound selected from the group consisting of p-hydroxybenzoic acid and 2-hydroxy-6-naphthoic acid, (ii) a repeating structural unit, in an amount of 10 mol% to 50 mol%, derived from at least one compound selected from the group consisting of 4-hydroxyaniline and 4,4'-diaminodiphenyl ether, (iii) a repeating structural unit, in an amount of 10 mol% to 50 mol%, derived from at least one compound selected from the group consisting of a terephthalic acid and an isophthalic acid. Examples of a further preferable combination encompass (i) a repeating structural unit, in an amount of 10 mol% to 35 mol%, derived from 4-hydroxyaniline and (ii) a repeating structural unit, in an amount of 20 mol% to 45 mol%, derived from an isophthalic acid.

A method of preparing the aromatic polymer B can be a method known to a person skilled in the art, and is not limited to any particular one. A method of preparing a wholly aromatic polyester will be described below as an example of the method for preparing the aromatic polymer B.

Examples of the method of preparing a wholly aromatic polyester encompass a method in which (i) an aromatic hydroxycarboxylic acid, an aromatic diol, an aromatic amine having a phenolic hydroxide group, or an aromatic diamine is subjected to acylation (acylation reaction) by an excess amount of fatty acid anhydride, so that an acylated product is obtained and (ii) the acylated product thus obtained and an aromatic hydroxycarboxylic acid and/or an aromatic dicarboxylic acid are subjected to ester exchange or amide exchange so as to be polymerized.

In the acylation reaction, an amount of the fatty acid anhydride to be added is preferably 1.0 equivalent to 1.2 equivalents and more preferably 1.05 equivalents to 1.1 equivalents with respect to a total amount of the phenolic hydroxide group and the amino group combined. If the amount of the fatty acid anhydride to be added is small, then, during polymerization through ester exchange or amide exchange, an acylated product, an aromatic hydroxycarboxylic acid, an aromatic dicarboxylic acid and the like tend to sublimate, so that a pipe or the like of a reaction apparatus tends to easily become blocked. If the amount of the fatty acid anhydride to be added is excessively large, then the wholly aromatic polyester to be obtained may be significantly colored.

The acylation reaction is made to last preferably 5 minutes to 10 hours at 130°C to 180°C, and more preferably 10 minutes to 3 hours at 140°C to 160°C.

Examples of the fatty acid anhydride to be used in the acylation reaction encompass, but are not particularly limited to, acetic anhydride, propionic acid anhydride, butyric anhydride, isobutyric acid anhydride, valeric acid anhydride, pivalic acid anhydride, 2-ethyl-hexanoic acid anhydride, monochloroacetic acid anhydride, dichloroacetic acid anhydride, trichloroacetic acid anhydride, monobromoacetic acid anhydride, dibromoacetic acid anhydride, tribromoacetic acid anhydride, monofluoroacetic acid anhydride, difluoroacetic acid anhydride, trifluoroacetic acid anhydride, glutaric acid anhydride, maleic anhydride, succinic anhydride, and β-bromopropionic acid anhydride. Two or more of these can be mixed when used. In view of cost and workability, acetic anhydride, propionic acid anhydride, butyric anhydride, and isobutyric acid anhydride are preferable, and acetic anhydride are more preferable.

During the polymerization through the ester exchange or amide exchange, an amount of the acyl group of the acylated product is preferably 0.8 equivalents to 1.2 equivalents with respect to an amount of the carboxyl group. A temperature during the polymerization is preferably equal to or less than 400°C, and more preferably equal to or less than 350°C. A temperature increase rate during the polymerization is preferably 0.1°C/min. to 50°C/min., and more preferably 0.3°C/min. to 5°C/min. In so doing, in order for a chemical equilibrium to be moved, it is preferable that a fatty acid, which has been produced as a byproduct, and an unreacted fatty acid anhydride are distilled away to the outside of a system by evaporating or the like.

Alternatively, the acylation reaction and the polymerization through the ester exchange or amide exchange can be carried out in the presence of a catalyst. The catalyst can be a catalyst that is publicly known as a polyester polymerization catalyst. Examples of such a catalyst encompass: metal salt catalysts such as magnesium acetate, stannous acetate, tetrabutyl titanate, lead acetate, sodium acetate, potassium acetate, and antimony trioxide; and organic compound catalysts such as N,N-dimethylaminopyridine and N-methylimidazole. Ordinarily, the catalyst is present during the acylation reaction, and does not necessarily need to be removed even after the acylation reaction. In a case where the catalyst is not removed after the acylation reaction, the next step (the polymerization through the ester exchange or amide exchange) can be carried out in the presence of the catalyst. Furthermore, a catalyst, such as the catalyst described above, can be further added during the polymerization through the ester exchange or amide exchange.

The polymerization through the ester exchange or amide exchange is ordinarily melt polymerization. Alternatively, it is possible to carry out melt polymerization and solid phase polymerization in combination. Solid phase polymerization can be carried out by (i) extracting a polymer during a melt polymerization step, (ii) solidifying the extracted polymer, (iii) crushing the resultant polymer into a powder-like polymer or a flake-like polymer, and then (iv) subjecting the powder-like polymer or the flake-like polymer to publicly known solid phase polymerization. Specific examples of the solid phase polymerization encompass a method in which the powder-like polymer or the flake-like polymer in a solid-phase state is heated in an inert atmosphere such as nitrogen at 20°C to 350°C for 1 hour to 30 hours. The solid phase

polymerization can be carried out while the powder-like polymer or the flake-like polymer is being stirred or being allowed to stand without stirring. Note that a melt polymerization tank and a solid phase polymerization tank can be combined to provide a single reaction vessel having a proper stirring mechanism. Note also that a wholly aromatic polyester obtained after the solid phase polymerization can be pelletized by a publicly known method before being used.

The wholly aromatic polyester can be prepared as described above with the use of, for example, a batch apparatus or a continuous apparatus.

< Filler>

The porous layer used in the present invention preferably further includes a filler. The filler can be made of a material selected from an organic powder, an inorganic powder, or a mixture of an organic powder and an inorganic powder.

Examples of the organic powder encompass powders made of organic matter such as: (i) a homopolymer of a monomer such as styrene, vinyl ketone, acrylonitrile, methyl methacrylate, ethyl methacrylate, glycidyl methacrylate, glycidyl acrylate, or methyl acrylate or (ii) a copolymer of two or more of such monomers; fluorine-based resins such as polytetrafluoroethylene, ethylene tetrafluoride-propylene hexafluoride copolymer, ethylene tetrafluoride-ethylene copolymer, and polyvinylidene fluoride; melamine resin; urea resin; polyolefin; and polymethacrylate. The filler can be made of one of these organic powders, or can be made of two or more of these organic powders mixed. Among these organic powders, a polytetrafluoroethylene powder is preferable in view of chemical stability.

Examples of the inorganic powder encompass powders made of inorganic matters such as metal oxide, metal nitride, metal carbide, metal hydroxide, carbonate, and sulfate. Specific examples of the inorganic powder encompass powders made of inorganic matters such as alumina, silica, titanium dioxide, aluminum hydroxide, and calcium carbonate. The filler can be made of one of these inorganic powders, or can be made of two or more of these inorganic powders mixed. Among these inorganic powders, an alumina powder is preferable in view of chemical stability. It is more preferable that particles by which the filler is constituted are all alumina particles. It is a still more preferable embodiment that (i) the particles by which the filler is constituted are all alumina particles and (ii) all or part of the alumina particles are substantially spherical alumina particles. Note that in an embodiment of the present invention, the substantially spherical alumina particles include absolutely spherical particles.

According to an embodiment of the present invention, in a case where, for example, the particles by which the filler is constituted are all alumina particles, a weight of the filler relative to a total weight of the porous layer is ordinarily equal to or greater than 20 weight% and equal to or less than 95 weight%, and preferably equal to or greater than 30 weight% and equal to or less than 90 weight%, although a filler content of the porous layer depends also on a specific gravity of the material of the filler. The above ranges can be set as appropriate according to the specific gravity of the material of the filler.

Examples of a shape of the filler in accordance with an embodiment of the present invention encompass a substantially spherical shape, a plate-like shape, a pillar shape, a needle shape, a whisker-like shape, and a fibrous shape. Although any particle can be used to constitute the filler, substantially spherical particles are preferable because substantially spherical particles allow uniform pores to be easily made. In view of strength and smoothness of the porous layer, an average particle diameter of particles by which the filler is constituted is preferably equal to or greater than 0.01 μm and equal to or less than 1 μm. Note that the average particle diameter is to be indicated by a value measured with the use of a photograph taken by a scanning electron microscope. Specifically, any 50 particles of particles captured in the photograph are selected, respective particle diameters of the 50 particles are measured, and then an average value of the particle diameters thus measured is used as the average particle diameter.

<Physical properties of porous layer>

In the following description of physical properties of the porous layer, in a case where the porous layer is disposed on both surfaces of the porous film serving as a porous base material, the physical properties refers to at least physical properties of a porous layer disposed on a surface of the porous base material which surface faces a cathode of the nonaqueous electrolyte secondary battery.

In a case where the porous film is used as a porous base material and where a porous layer is disposed on one surface or both surfaces of the porous film, a thickness of the porous layer is preferably 0.5 μm to 15 μm (per surface of the porous film), and more preferably 2 μm to 10 μm (per surface of the porous film), although the thickness of the porous layer can be decided as appropriate in view of a thickness of a nonaqueous electrolyte secondary battery separator to be produced.

The thickness of the porous layer is preferably equal to or greater than 1 μm (equal to or greater than 0.5 μm per surface of the porous film). This is because, with such a thickness, (i) an internal short circuit of the battery, which internal short circuit is caused by breakage or the like of the battery, can be sufficiently prevented in a nonaqueous

electrolyte secondary battery laminated separator which includes the porous layer and (ii) an amount of an electrolyte solution retained in the porous layer can be maintained. Meanwhile, a total thickness of both the surfaces of the porous layer is preferably equal to or less than 30 μm (equal to or less than 15 μm per surface of the porous film). This is because, with such a thickness, (i) it is possible to restrict an increase in resistance to permeation of ions such as lithium ions all over the nonaqueous electrolyte secondary battery laminated separator which includes the porous layers, (ii) it is possible to prevent the cathode from deteriorating in a case where a charge-discharge cycle is repeated, so that a rate characteristic and/or a cycle characteristic is/are prevented from deteriorating, and (iii) an increase in distance between the cathode and an anode is restricted, so that the nonaqueous electrolyte secondary battery can be prevented from being large in size.

<Porous layer production method>

The porous layer used in the present invention can be produced by, for example, (i) dissolving the resin in a solvent and, optionally, dispersing the filler, so as to prepare a coating solution for forming a porous layer and then (ii) coating a base material with the coating solution and then drying the coating solution, so as to precipitate the porous layer.

Examples of the base material encompass a porous film and an electrode (described later).

The solvent (dispersion medium) only needs to (i) not have an adverse effect on the base material, (ii) uniformly and stably dissolve the resin, (iii) allow the filler to be uniformly and stably dispersed therein. The solvent (dispersion medium) is not limited to any particular one. Specific examples of the solvent (dispersion medium) encompass N-methylpyrrolidone, N,N-dimethylacetamide, and N,N-dimethylformamide. Only one of these solvents (dispersion media) can be used, or two or more of these solvents (dispersion media) can be used in combination.

The coating solution can be formed by any method, provided that the coating solution can satisfy conditions such as a resin solid content (resin concentration) and the amount of the filler, each of which conditions is necessary to obtain a desired porous layer. Specific examples of the method encompass a method in which the nitrogen-containing aromatic polymer A and the aromatic polymer B are dissolved in a solvent (dispersion medium) and are then mixed together. In a case where the filler is added, the filler can be dispersed in a solvent (dispersion medium) with the use of a conventionally and publicly known dispersing device such as a three-one motor, a homogenizer, a medium type dispersing device, or a pressure type dispersing device.

A method of coating the base material with the coating solution encompasses publicly known coating methods such as a knife coater method, a blade coater method, a bar coater method, a gravure coater method, and a die coater method.

A method of removing the solvent (dispersion medium) is generally a drying method. Examples of the drying method encompass natural drying, air-blowing drying, heat drying, and drying under reduced pressure. Note, however, any method can be used, provided that the solvent (dispersion medium) can be sufficiently removed. In addition, a drying step can be carried out after the solvent (dispersion medium) contained in the coating solution is replaced with another solvent. Specific examples of the method, in which the solvent (dispersion medium) is replaced with another solvent and then a drying step is carried out, encompass a method in which (i) the solvent (dispersion medium) is replaced with a poor solvent having a low boiling point, such as water, alcohol, and acetone and (ii) the porous layer is precipitated and then the drying process is carried out.

[Embodiment 2: Nonaqueous electrolyte secondary battery laminated separator]

A nonaqueous electrolyte secondary battery laminated separator in accordance with Embodiment 2 of the present invention includes: (i) a porous base material containing a polyolefin-based resin as a main component; and (ii) the porous layer as described herein which porous layer is disposed on at least one surface of the porous base material.

<Porous base material>

The porous base material in accordance with an embodiment of the present invention contains a polyolefin-based resin as a main component, and can be a porous film containing a polyolefin-based resin as a main component. The porous film is preferably a microporous film. Specifically, the porous film, which contains a polyolefin-based resin as a main component, preferably has pores therein, the pores being connected to one another, so that a gas, a liquid, or the like can pass through the porous film from one surface of the porous film to the other. The porous film can include a single layer or a plurality of layers.

The "porous film (porous base material) containing a polyolefin-based resin as a main component" herein means that a polyolefin-based resin component is contained in the porous film at a proportion of ordinarily equal to or

greater than 50% by volume, preferably equal to or greater than 90% by volume, and more preferably equal to or greater than 95% by volume of an entire portion of the porous film. The polyolefin-based resin of the porous film preferably contains a high molecular weight component having a weight-average molecular weight of $5 \times 10^5$ to $15 \times 10^6$. It is preferable that polyolefin-based resin having a weight-average molecular weight of equal to or greater than 1,000,000 is contained as a polyolefin-based resin in the porous film. This is because, in such a case, there can be an increase in (i) strength of an entire portion of the porous film, that is, strength of an entire portion of the nonaqueous electrolyte secondary battery separator and (ii) an entire portion of a nonaqueous electrolyte secondary battery laminated separator which includes the porous film and the porous layer (described later).

Examples of the polyolefin-based resin encompass high molecular weight homopolymers (such as polyethylene, polypropylene, or polybutene) or high molecular weight copolymers (such as ethylene-propylene copolymer) produced through polymerization of ethylene, propylene, 1-butene, 4-methyl-1-pentene, or 1-hexene. The porous film is a layer which includes one of these polyolefin-based resins and/or two or more of these polyolefin-based resins. A high molecular weight polyethylene-based resin containing ethylene as a main component is particularly preferable in view of the fact that such a polyethylene-based resin can prevent (shut down) the flow of an excessively large current at a low temperature. Note that the porous film can contain any components other than the polyolefin-based resin, provided that the components does not impair the function of the porous film.

Air permeability of the porous film in terms of Gurley values is ordinarily in a range of 30 sec / 100 cc to 500 sec / 100 cc, and preferably in a range of 50 sec / 100 cc to 300 sec / 100 cc. In a case where the air permeability of the porous film falls within these ranges, sufficient ion permeability can be imparted to (i) the porous film which is used as a nonaqueous electrolyte secondary battery separator or (ii) a nonaqueous electrolyte secondary battery laminated separator including the porous film and the porous layer (described later).

In regard to a thickness of the porous film, less thickness can cause energy density of the battery to be higher. Therefore, the thickness of the porous film is preferably equal to or less than 20 μm, more preferably equal to or less than 16 μm, and still more preferably equal to or less than 11 μm. In view of film strength, the thickness of the porous film is preferably equal to or greater than 4 μm. That is, the thickness of the porous film is preferably 4 μm to 20 μm.

A method of producing the porous film can be any publicly known method, and is not limited to any particular one. For example, as disclosed in Japanese Patent No. 5476844, the porous film can be produced by (i) adding a filler to a thermoplastic resin, (ii) forming, into a film, the thermoplastic resin containing the filler, and then (iii) removing the filler.

Specifically, in a case where, for example, the porous film is made of polyolefin resin containing ultra-high molecular weight polyethylene and low molecular weight polyolefin which has a weight-average molecular weight of equal to or less than 10,000, the porous film is preferably produced by, in view of production costs, a method including the following steps (1) through (4):

(1) kneading 100 parts by weight of ultra-high molecular weight polyethylene, 5 parts by weight to 200 parts by weight of low molecular weight polyolefin having a weight-average molecular weight of equal to or less than 10,000, and 100 parts by weight to 400 parts by weight of an inorganic filler such as calcium carbonate, so that a polyolefin resin composition is obtained;
(2) forming the polyolefin resin composition into a sheet;
(3) removing the inorganic filler from the sheet obtained in the step (2); and
(4) stretching the sheet obtained in the step (3). Alternatively, the porous film can be produced through a method disclosed in any of the above-described Patent Literature.

Alternatively, the porous film used in the present invention can be a commercial product having the above-described characteristics.

<Nonaqueous electrolyte secondary battery laminated separator production method>

The nonaqueous electrolyte secondary battery laminated separator in accordance with an embodiment of the present invention can be produced by, for example, a method in which the porous film containing polyolefin as a main component is used as a base material in the above-described method of producing the porous layer.

<Physical properties of nonaqueous electrolyte secondary battery laminated separator>

In regard to a thickness of the nonaqueous electrolyte secondary battery laminated separator in accordance with an embodiment of the present invention, less thickness can allow energy density of the battery to be higher, and is therefore preferable. However, a less thickness also leads to less strength, and there is therefore a limitation on a reduction in the thickness during production of the nonaqueous electrolyte secondary battery laminated separator. In view of these factors, the nonaqueous electrolyte secondary battery laminated separator in accordance with an embodiment of the present invention has a thickness of preferably equal to or less than 50 μm, more preferably equal to or less than 25 μm, and still more preferably equal to or less than 20 μm. In addition, the nonaqueous electrolyte secondary battery laminated separator preferably has a thickness of equal to or greater than 5 μm.

Air permeability of the nonaqueous electrolyte secondary battery laminated separator in accordance with an embodiment of the present invention in terms of Gurley values is preferably 30 sec / 100 cc to 1000 sec / 100 cc, and more preferably 50 sec / 100 cc to 800 sec / 100 cc. In a case where the laminated body has air permeability falling within these ranges, the laminated body used as a nonaqueous electrolyte secondary battery separator can have sufficient ion permeability. If the air permeability is above these ranges, then it means that the laminated body has a high porosity and that a laminated structure is therefore rough. This poses a risk that strength of the laminated body may decrease, so that shape stability particularly at a high temperature may be insufficient. In contrast, if the air permeability is below these ranges, then the laminated body, which is used as a nonaqueous electrolyte secondary battery separator, may not have sufficient ion permeability. This may cause deterioration of the battery characteristic of the nonaqueous electrolyte secondary battery.

Note that the nonaqueous electrolyte secondary battery laminated separator in accordance with an embodiment of the present invention can include, as needed, a publicly known porous film(s) such as an adhesive layer and a protection layer in addition to the porous film and the porous layer, provided that the objective of an embodiment of the present invention is not impaired.

[Embodiment 3: Nonaqueous electrolyte secondary battery member, Embodiment 4: Nonaqueous electrolyte secondary battery]

A nonaqueous electrolyte secondary battery member in accordance with Embodiment 3 of the present invention includes: a cathode; the porous layer as described herein
and an anode, the cathode, the porous layer, and the anode being arranged in this order. A nonaqueous electrolyte secondary battery in accordance with Embodiment 4 of the present invention includes the porous layer as described herein and preferably includes the nonaqueous electrolyte secondary battery laminated separator in accordance with Embodiment 2 of the present invention or the nonaqueous electrolyte secondary battery member in accordance with Embodiment 3 of the present invention.

The nonaqueous electrolyte secondary battery in accordance with an embodiment of the present invention and a nonaqueous electrolyte secondary battery including the nonaqueous electrolyte secondary battery member in accordance with an embodiment of the present invention each include a separator having excellent heat resistance and excellent ion permeability. This brings about excellent battery characteristics.

The following description will discuss a lithium ion secondary battery as an example of (i) the nonaqueous electrolyte secondary battery member in accordance with an embodiment of the present invention and (ii) the nonaqueous electrolyte secondary battery in accordance with an embodiment of the present invention. Note that any constituent elements other than the separator of the nonaqueous electrolyte secondary battery member and the separator of the nonaqueous electrolyte secondary battery are not limited to constituent elements described below.

The nonaqueous electrolyte secondary battery in accordance with an embodiment of the present invention can include a nonaqueous electrolyte solution prepared by dissolving a lithium salt in an organic solvent. Examples of the lithium salt encompass $LiClO_4$, $LiPF_6$, $LiAsF_6$, $LiSbF_6$, $LiBF_4$, $LiCF_3SO_3$, $LiN(CF_3SO_2)_2$, $LiC(CF_3SO_2)_3$, $Li_2B_{10}Cl_{10}$, lower aliphatic carboxylic acid lithium salt, and $LiAlCl_4$. The present embodiment may use (i) only one kind of the above lithium salts or (ii) two or more kinds of the above lithium salts in combination. The present embodiment preferably uses, among the above lithium salts, at least one fluorine-containing lithium salt selected from the group consisting of $LiPF_6$, $LiAsF_6$, $LiSbF_6$, $LiBF_4$, $LiCF_3SO_3$, $LiN(CF_3SO_2)_2$, and $LiC(CF_3SO_2)_3$.

Specific examples of the organic solvent in the nonaqueous electrolyte solution encompass carbonates such as ethylene carbonate, propylene carbonate, dimethyl carbonate, diethyl carbonate, ethyl methyl carbonate, 4-trifluoromethyl-1,3-dioxolane-2-on, and 1,2-di(methoxy carbonyloxy)ethane; ethers such as 1,2-dimethoxyethane, 1,3-dimethoxypropane, pentafluoropropyl methylether, 2,2,3,3-tetrafluoropropyl difluoro methylether, tetrahydrofuran, and 2-methyl tetrahydrofuran; esters such as methyl formate, methyl acetate, and γ-butyrolactone; nitriles such as acetonitrile and butyronitrile; amides such as N,N-dimethylformamide and N,N-dimethylacetamide; carbamates such as 3-methyl-2-oxazolidone; sulfur-containing compounds such as sulfolane, dimethyl sulfoxide, and 1,3-propane sultone; and fluorine-containing organic solvents each prepared by introducing a fluorine group into the organic solvent. The present embodiment may use (i) only one kind of the above organic solvents or (ii) two or more kinds of the above organic solvents in combination. Among the above organic solvents, carbonates are preferable. A mixed solvent of a cyclic carbonate and an acyclic carbonate or a mixed solvent of a cyclic carbonate and an ether is more preferable. The mixed solvent of a cyclic carbonate and an acyclic carbonate is preferably a mixed solvent of ethylene carbonate, dimethyl carbonate, and ethyl methyl carbonate because such a mixed solvent allows a wider operating temperature range, and is not easily decomposed even in a case where the present embodiment uses, as an anode active material, a graphite material such

as natural graphite or artificial graphite.

The cathode is ordinarily a sheet-shaped cathode including (i) a cathode mix containing a cathode active material, an electrically conductive material, and a binding agent and (ii) a cathode current collector supporting the cathode mix thereon.

The cathode active material is, for example, a material capable of being doped and dedoped with lithium ions. Specific examples of such a material encompass a lithium complex oxide containing at least one transition metal such as V, Mn, Fe, Co, or Ni. Among such lithium complex oxides, (i) a lithium complex oxide having an $\alpha$-$NaFeO_2$ structure such as lithium nickelate and lithium cobaltate and (ii) a lithium complex oxide having a spinel structure such as lithium manganese spinel are preferable because such lithium complex oxides have a high average discharge potential. The lithium complex oxide containing the at least one transition metal may further contain any of various metallic elements, and is more preferably complex lithium nickelate containing at least one metallic element selected from the group consisting of Ti, Zr, Ce, Y, V, Cr, Mn, Fe, Co, Cu, Ag, Mg, Al, Ga, In, and Sn at a proportion of 0.1 mol% to 20 mol% with respect to the sum of the number of moles of the at least one metallic element and the number of moles of Ni in the lithium nickelate. The active material particularly preferably contains Al or Mn, and contains Ni at a proportion of equal to or greater than 85%, further preferably equal to or greater than 90%. This is because a nonaqueous electrolyte secondary battery including a cathode containing such an active material has an excellent cycle characteristic in a case where the nonaqueous electrolyte secondary battery has a high capacity.

Examples of the electrically conductive material encompass carbonaceous materials such as natural graphite, artificial graphite, cokes, carbon black, pyrolytic carbons, carbon fiber, and a fired product of an organic polymer compound. The present embodiment may use (i) only one kind of the above electrically conductive materials or (ii) two or more kinds of the above electrically conductive materials in combination, for example, a mixture of artificial graphite and carbon black.

Examples of the binding agent encompass thermoplastic resins such as polyvinylidene fluoride, a copolymer of vinylidene fluoride, polytetrafluoroethylene, a vinylidene fluoride-hexafluoropropylene copolymer, a tetrafluoroethylene-hexafluoropropylene copolymer, a tetrafluoroethylene-perfluoroalkyl vinyl ether copolymer, an ethylene-tetrafluoroethylene copolymer, a vinylidene fluoride-tetrafluoroethylene copolymer, a vinylidene fluoride-trifluoro ethylene copolymer, a vinylidene fluoride-trichloroethylene copolymer, a vinylidene fluoride-vinyl fluoride copolymer, a vinylidene fluoride-hexafluoropropylene-tetrafluoroethylene copolymer, a thermoplastic polyimide, polyethylene, and polypropylene. The binding agent functions also as a thickener.

The cathode mix may be prepared by, for example, a method of applying pressure to the cathode active material, the electrically conductive material, and the binding agent on the cathode current collector or a method of using an appropriate organic solvent so that the cathode active material, the electrically conductive material, and the binding agent are in a paste form.

The cathode current collector is, for example, an electric conductor such as Al, Ni, and stainless steel, among which Al is preferable because Al is easily processed into a thin film and is inexpensive.

The sheet-shaped cathode may be produced, that is, the cathode mix may be supported by the cathode current collector, by, for example, a method of applying pressure to the cathode active material, the electrically conductive material, and the binding agent on the cathode current collector to form a cathode mix thereon or a method of (i) using an appropriate organic solvent so that the cathode active material, the electrically conductive material, and the binding agent are in a paste form to provide a cathode mix, (ii) applying the cathode mix to the cathode current collector, (iii) drying the applied cathode mix to prepare a sheet-shaped cathode mix, and (iv) applying pressure to the sheet-shaped cathode mix so that the sheet-shaped cathode mix is firmly fixed to the cathode current collector.

The anode is ordinarily a sheet-shaped anode including (i) an anode mix containing an anode active material and (ii) an anode current collector supporting the anode mix thereon.

The anode active material is, for example, (i) a material capable of being doped and dedoped with lithium ions, (ii) a lithium metal, or (iii) a lithium alloy. Specific examples of the material encompass carbonaceous materials such as natural graphite, artificial graphite, cokes, carbon black, pyrolytic carbons, carbon fiber, and a fired product of an organic polymer compound; chalcogen compounds such as an oxide and a sulfide that are doped and dedoped with lithium ions at an electric potential lower than that for the cathode; metals that can be alloyed with an alkali metal such as aluminum (Al), lead (Pb), tin (Sn), bismuth (Bi), and silicon (Si); cubic-crystal intermetallic compounds (for example, AlSb, $Mg_2Si$, and $NiSi_2$) of which an alkali metal is insertable into the lattice; and a lithium nitrogen compound such as $Li_3$-$xM_xN$ (where M is a transition metal). Among the above anode active materials, a carbonaceous material containing a graphite material such as natural graphite or artificial graphite as a main component is preferable because such a carbonaceous material has high electric potential flatness and low average discharge potential, and can thus be combined with a cathode to achieve a high energy density. The anode active material is more preferably a mixture of graphite and silicon with a Si content of equal to or greater than 5%, still more preferably equal to or greater than 10%, with respect to carbon (C) which constitutes the graphite.

The anode mix may be prepared by, for example, a method of applying pressure to the anode active material

on the anode current collector or a method of using an appropriate organic solvent so that the anode active material is in a paste form.

The anode current collector is, for example, Cu, Ni, or stainless steel, among which Cu is preferable because Cu is not easily alloyed with lithium in the case of a lithium ion secondary battery and is easily processed into a thin film.

The sheet-shaped anode may be produced, that is, the anode mix may be supported by the anode current collector, by, for example, a method of applying pressure to the anode active material on the anode current collector to form an anode mix thereon or a method of (i) using an appropriate organic solvent so that the anode active material is in a paste form to provide an anode mix, (ii) applying the anode mix to the anode current collector, (iii) drying the applied anode mix to prepare a sheet-shaped anode mix, and (iv) applying pressure to the sheet-shaped anode mix so that the sheet-shaped anode mix is firmly fixed to the anode current collector.

The nonaqueous electrolyte secondary battery member in accordance with an embodiment of the present invention can formed by arranging the cathode, the porous layer,
and the anode in this order.

The nonaqueous electrolyte secondary battery in accordance with an embodiment of the present invention can be produced by (i) forming the nonaqueous electrolyte secondary battery member in accordance with an embodiment of the present invention by the above-described method, (ii) inserting the nonaqueous electrolyte secondary battery member into a container for use as a housing of the nonaqueous electrolyte secondary battery, (iii) filling the container with a nonaqueous electrolyte solution, and (iv) hermetically sealing the container under reduced pressure. The nonaqueous electrolyte secondary battery may have any shape such as the shape of a thin plate (sheet), a disk, a cylinder, or a prism such as a cuboid. The method of producing the nonaqueous electrolyte secondary battery is not limited to any particular one, and can be a conventionally and publicly known method.

The present invention is not limited to the description of the embodiments, but can be altered in many ways by a person skilled in the art within the scope of the claims. An embodiment derived from a proper combination of technical means disclosed in different embodiments is also encompassed in the technical scope of the present invention.

[Examples]

The following description will discuss an embodiment of the present invention in more detail by Examples and Comparative Examples. Note, however, that the present invention is not limited to these Examples and Comparative Examples.

[Method of measuring physical properties and the like]

Physical properties and the like of a laminated porous film (laminated separator), a separator base material (porous film), a coating film (porous layer), and a polymer solution in each of Examples and Comparative Examples were measured by the following method.

(1) Thickness (unit: μm):

In conformity with a JIS standard (K 7130-1992), a thickness of the laminated porous film (that is, a thickness of an entire portion of the laminated porous film) and a thickness of the separator base material were each measured with the use of a high-resolution digital measuring device manufactured by Mitutoyo Corporation.

(2) Air permeability as measured through Gurley method (sec /100 cc)

In conformity with a JIS P 8117, air permeability of the laminated porous film was measured with the use of a digital timer Gurley densometer manufactured by YASUDA SEIKI SEISAKUSHO, LTD.

(3) Viscosity (dl/g or cp)

Intrinsic viscosity of a para-aramid prepared in each of Examples and Comparative Examples was measured by the following method. The intrinsic viscosity was measured by the following formula, based on a ratio between respective flow times of (i) a solution obtained by dissolving 0.5 g of a para-aramid in 100 ml of 96%-to-98% sulfuric acid and (ii) 96%-to-98% sulfuric acid:

$$\text{intrinsic viscosity [unit: dl/g]} = \ln(T/T_0)/C$$

Where (i) T and To are flow times of the sulfuric acid solution of the para-aramid and of the sulfuric acid, respectively and (ii) C is a para-aramid concentration (g/dl) in the sulfuric acid solution of the para-aramid.
Viscosity of an aromatic polyester solution prepared in each of Examples and Comparative Examples was measured at 23 C with the use of a B-type viscometer "Model TVL-20" manufactured by Toki Sangyo Co. Ltd.

[Example 1]

<Preparation of para-aramid solution>

PPTA was synthesized with the use of a 5-liter (1) separable flask having a stirring blade, a thermometer, a nitrogen incurrent canal, and a powder addition port.
The separable flask was sufficiently dried, and then 4200 g of NMP was introduced into the separable flask. Then, 272.65 g of calcium chloride, which had been dried at 200°C for 2 hours, was added, and then a temperature inside the separable flask was increased to 100°C. After the calcium chloride was completely dissolved, the temperature inside the flask was returned to room temperature, and then 132.91 g of paraphenylenediamine (hereinafter abbreviated as "PPD") was added. Then, the PPD was completely dissolved, so that a solution was obtained. While a temperature of the solution was maintained at 20±2°C, 243.32 g of a terephthalic acid dichloride (hereinafter abbreviated as "TPC") was added, to the solution, in ten separate portions at approximately 5-minute intervals. Then, while a temperature of the resultant solution was maintained at 20±2°C, the solution was matured for 1 hour. Then, the solution was stirred under reduced pressure for 30 minutes to eliminate air bubbles, so that a PPTA solution (polymer solution) was obtained. Part of the polymer solution, as a sample, was reprecipitated with the use of water, and was then extracted was a polymer, so that PPTA was obtained. Then, intrinsic viscosity of the PPTA thus obtained was measured, and was 1.97 dl/g. The PPTA solution thus obtained will be referred to as "solution A", and the PPTA thus obtained will be referred to as "polymer A".

<Preparation of aromatic polyester solution>

Into a reactor including a stirring apparatus, a torque meter, a nitrogen gas inlet tube, a thermometer, and a reflux condenser, 941 g (5.0 mol) of 2-hydroxy-6-naphthoic acid, 377.9 g (2.5 mol) of 4-hydroxyacetanilide, 415.3 g (2.5 mol) of isophthalic acid, and 867.8 g (8.5 mol) of acetic anhydride were introduced. Then, a gas inside the reactor was sufficiently replaced with a nitrogen gas, and then a temperature inside the reactor was increased to 150°C under a nitrogen gas airflow over a period of 15 minutes. Then, while the temperature (150°C) was maintained, the reaction solution was refluxed for 3 hours.
Then, while an acetic acid distilled as a byproduct and an unreacted acetic anhydride were distill away, the temperature was increased to 300°C over a period of 170 minutes. At a time point at which an increase in torque was observed, a reaction was determined to have ended. Then, a resultant content was extracted. The resultant content was cooled to room temperature, and then was crushed with the use of a crusher. Then, a wholly aromatic polyester powder having a relatively low molecular weight was obtained.
A temperature, at which the wholly aromatic polyester powder having a relatively low molecular weight started flowing, was measured with the use of a flow tester "Model CFT-500" manufactured by Shimadzu Corporation, and was 197°C.
Then, the wholly aromatic polyester powder was subjected to solid phase polymerization by being subjected to a heat treatment at 180°C in a nitrogen atmosphere for 5 hours, and then being subjected to a heat treatment at 250°C in a nitrogen atmosphere for 5 hours. A temperature, at which the wholly aromatic polyester having relatively high molecular weight after the solid phase polymerization started flowing, was measured as described above, and was 302°C.
40 g of the obtained wholly aromatic polyester having a relatively high molecular weight was added to 460 g of N-methyl-2-pyrrolidone, and then a resultant mixture was heated at 100°C for 2 hours, so that a liquid composition was obtained. Then, viscosity of the liquid composition was measured at a temperature of 23°C with the use of a B-type viscometer "Model TVL-20" (Rotor No. 21, rotation speed: 5 rpm) manufactured by Toki Sangyo Co. Ltd., and was 800 cP. The wholly aromatic polyester solution thus obtained will be referred to as "solution $B_1$", and the wholly aromatic polyester thus obtained will be referred to as "polymer $B_1$".

<Preparation of coating solution>

The solution A and the solution $B_1$ were mixed to form a mixed solution so that a mixing ratio, (polymer A):(polymer $B_1$), would be 100 parts by weight : 100 parts by weight. Then, with respect to 100 parts by weight of the polymer A, 100 parts by weight of an alumina powder having an average particle diameter of 0.02 μm and 100 parts by weight of an alumina powder having an average particle diameter of 0.3 μm were added to the mixed solution. Then, a resultant

mixture was diluted with NMP so that a solid content concentration would be 5.3%. Then, the resultant mixture was stirred with the use of a homogenizer, and was then treated twice at 50 MPa with the use of a pressure type dispersing device, so that a coating solution 1 was obtained.

<Production of laminated porous film>

A PE separator base material (air permeability of 120 sec / 100 cc, thickness of 15 μm) was attached to a glass plate, and then a surface (one surface) of the PE separator base material was coated with the coating solution 1 with the use of a bar coater manufactured by Tester Sangyo Co., Ltd. Then, the resultant coated product was placed, for 1 minute, in a humidifying oven having a relative humidity of 80% at 60°C, was washed with the use of ion exchange water, and was then dried with the use of an oven at 80°C, so that a laminated porous film was obtained. Air permeability and thickness of the laminated porous film were 200 sec / 100 cc and 19.9 μm, respectively.

[Example 2]

<Preparation of para-aramid solution>

A PPTA solution (solution A) was obtained as in Example 1.

<Preparation of aromatic polyester solution>

Into a reactor including a stirring apparatus, a torque meter, a nitrogen gas inlet tube, a thermometer, and a reflux condenser, 248.6 g (1.8 mol) of 4-hydroxybenzoic acid, 468.6 g (3.1 mol) of 4-hydroxyacetanilide, 681.1 g (4.1 mol) of isophthalic acid, 110.1 g (1.0 mol) of hydrochinone, and 806.5 g (7.90 mol) of acetic anhydride were introduced. Then, a gas inside the reactor was sufficiently replaced with a nitrogen gas, and then a temperature inside the reactor was increased to 150°C under a nitrogen gas airflow over a period of 15 minutes. Then, while the temperature (150°C) was maintained, the reaction solution was refluxed for 3 hours.

Then, while an acetic acid distilled as a byproduct and an unreacted acetic anhydride were distill away, the temperature was increased to 300°C over a period of 300 minutes. At a time point at which an increase in torque was observed, a reaction was determined to have ended. Then, a resultant content was extracted. The resultant content was cooled to room temperature, and then was crushed with the use of a crusher. Then, an aromatic polyester powder having a relatively low molecular weight was obtained.

A temperature, at which the aromatic polyester powder having a relatively low molecular weight started flowing, was measured with the use of a flow tester "Model CFT-500" manufactured by Shimadzu Corporation, and was 253.2°C.

Then, the aromatic polyester powder was subjected to solid phase polymerization by being subjected to a heat treatment at 290°C in a nitrogen atmosphere for 3 hours, so that a wholly aromatic polyester having a relatively high molecular weight was obtained.

100 g of the obtained wholly aromatic polyester having a relatively high molecular weight was added to 400 g of N-methyl-2-pyrrolidone, and then a resultant mixture was heated at 100°C for 2 hours, so that a liquid composition was obtained. Then, viscosity of the liquid composition was measured at a temperature of 23°C with the use of a B-type viscometer "Model TVL-20" (Rotor No. 22, rotation speed: 20 rpm) manufactured by Toki Sangyo Co. Ltd., and was 3000 cP. The wholly aromatic polyester solution thus obtained will be referred to as "solution $B_2$", and the wholly aromatic polyester thus obtained will be referred to as "polymer $B_2$".

<Preparation of coating solution>

The solution A and the solution $B_2$ were mixed to form a mixed solution so that a mixing ratio, (polymer A):(polymer $B_2$), would be 100 parts by weight : 100 parts by weight. Then, with respect to 100 parts by weight of polymer A, 200 parts by weight of an alumina powder having an average particle diameter of 0.02 μm and 200 parts by weight of an alumina powder having an average particle diameter of 0.3 μm were added to the mixed solution. Then, a resultant mixture was diluted with NMP so that a solid content concentration would be 6.0%. Then, the resultant mixture was stirred with the use of a homogenizer, and was then treated twice at 50 MPa with the use of a pressure type dispersing device, so that a coating solution 2 was obtained.

<Production of laminated porous film>

A PE separator base material (air permeability of 120 sec / 100 cc, thickness of 15 μm) was attached to a glass plate, and then a surface (one surface) of the PE separator base material was coated with the coating solution 2 with

the use of a bar coater manufactured by Tester Sangyo Co., Ltd. Then, the resultant coated product was placed, for 1 minute, in a humidifying oven having a relative humidity of 80% at 60°C, was washed with the use of ion exchange water, and was then dried with the use of an oven at 80°C, so that a laminated porous film was obtained. Air permeability and thickness of the laminated porous film were 230 sec / 100 cc and 19.5 μm, respectively.

[Comparative Example 1]

<Preparation of coating solution>

A solution (solution A) of a PPTA (polymer A) was prepared as in Example 1.

Then, with respect to 100 parts by weight of the polymer A, 100 parts by weight of an alumina powder having an average particle diameter of 0.02 μm and 100 parts by weight of an alumina powder having an average particle diameter of 0.3 μm were added to the solution A. Then, a resultant mixture was diluted with NMP so that a solid content concentration would be 6.0%. Then, the resultant mixture was stirred with the use of a homogenizer, and was then treated twice at 50 MPa with the use of a pressure type dispersing device, so that a coating solution 3 was obtained.

<Production of laminated porous film>

A PE separator base material (air permeability of 120 sec / 100 cc, thickness of 15 μm) was attached to a glass plate, and then a surface (one surface) of the PE separator base material was coated with the coating solution 3 with the use of a bar coater manufactured by Tester Sangyo Co., Ltd. Then, the resultant coated product was placed, for 1 minute, in a humidifying oven having a relative humidity of 80% at 60°C, was washed with the use of ion exchange water, and was then dried with the use of an oven at 80°C, so that a laminated porous film was obtained. Air permeability and thickness of the laminated porous film were 270 sec / 100 cc and 19.5 μm, respectively.

[Example 3]

<Preparation of aromatic polyamide imide solution>

Into a reactor including a stirring apparatus, a torque meter, a nitrogen gas inlet tube, a thermometer, and a reflux condenser, 192 g of trimellitic acid anhydride (TMA), 250 g of diphenylmethane diisocyanate (MDI), and 1.2 g of potassium fluoride were introduced with N-methylpyrrolidone (NMP) so that a solid content concentration would be 15%. Then, the mixture was stirred at 130°C for 5 hours, and was then cooled to room temperature. The polyamide imide solution obtained will be referred to as "solution $B_3$", and a wholly aromatic polyamide imide obtained will be referred to as "polymer $B_3$".

<Preparation of coating solution>

The solution A and the solution $B_3$ were mixed to form a mixed solution so that a mixing ratio, (polymer A):(polymer $B_3$), would be 100 parts by weight : 100 parts by weight. Then, with respect to 100 parts by weight of the polymer A, 200 parts by weight of an alumina powder having an average particle diameter of 0.02 μm and 200 parts by weight of an alumina powder having an average particle diameter of 0.3 μm were added to the mixed solution. Then, a resultant mixture was diluted with NMP so that a solid content concentration would be 6.0%. Then, the resultant mixture was stirred with the use of a homogenizer, and was then treated twice at 50 MPa with the use of a pressure type dispersing device, so that a coating solution 4 was obtained.

<Production of laminated porous film>

A PE separator base material (air permeability of 120 sec / 100 cc, thickness of 15 μm) was attached to a glass plate, and then a surface (one surface) of the PE separator base material was coated with the coating solution 4 with the use of a bar coater manufactured by Tester Sangyo Co., Ltd. Then, the resultant coated product was placed, for 1 minute, in a humidifying oven having a relative humidity of 80% at 60°C, was washed with the use of ion exchange water, and was then dried with the use of an oven at 80°C, so that a laminated porous film was obtained. Air permeability and thickness of the laminated porous film were 210 sec / 100 cc and 23.8 μm, respectively.

[Example 4]

<Preparation of meta-aramid solution>

Into a 5-liter (1) separable flask having a stirring blade, a thermometer a nitrogen incurrent canal, and a powder addition port, 222 g of methaphenylenediamine and 3300 g of N-methylpyrrolidone were introduced. Then, a resultant mixture was stirred and dissolved, so that a methaphenylenediamine solution was obtained. Then, a solution was obtained by dissolving, into 1000 g of NMP, 419 g of isophthalic acid chloride which had been melted by being heated to 70°C. Then, the solution was dropped onto the methaphenylenediamine solution, and then a resultant mixture was reacted at 23°C for 60 minutes, so that a meta-aramid resin solution was obtained. The meta-aramid resin solution thus obtained will be referred to as "solution $B_4$", and a wholly aromatic meta-aramid obtained will be referred to as "polymer $B_4$".

<Preparation of coating solution>

The solution A and the solution $B_4$ were mixed to form a mixed solution so that a mixing ratio, (polymer A):(polymer $B_4$), would be 100 parts by weight : 100 parts by weight. Then, with respect to 100 parts by weight of the polymer A, 200 parts by weight of an alumina powder having an average particle diameter of 0.02 μm and 200 parts by weight of an alumina powder having an average particle diameter of 0.3 μm were added to the mixed solution. Then, a resultant mixture was diluted with NMP so that a solid content concentration would be 6.0%. Then, the resultant mixture was stirred with the use of a homogenizer, and was then treated twice at 50 MPa with the use of a pressure type dispersing device, so that a coating solution 5 was obtained.

<Production of laminated porous film>

A PE separator base material (air permeability of 120 sec / 100 cc, thickness of 15 μm) was attached to a glass plate, and then a surface (one surface) of the PE separator base material was coated with the coating solution 5 with the use of a bar coater manufactured by Tester Sangyo Co., Ltd. Then, the resultant coated product was placed, for 1 minute, in a humidifying oven having a relative humidity of 80% at 60°C, was washed with the use of ion exchange water, and was then dried with the use of an oven at 80°C, so that a laminated porous film was obtained. Air permeability and thickness of the laminated porous film were 230 sec / 100 cc and 22.8 μm, respectively.

[Example 5]

<Preparation of coating solution>

The solution A and the solution $B_2$ were mixed to form a mixed solution so that a mixing ratio, (polymer A):(polymer $B_2$), would be 50 parts by weight : 150 parts by weight. Then, with respect to 50 parts by weight of the polymer A, 200 parts by weight of an alumina powder having an average particle diameter of 0.02 μm and 200 parts by weight of an alumina powder having an average particle diameter of 0.3 μm were added to the mixed solution. Then, a resultant mixture was diluted with NMP so that a solid content concentration would be 6.0%. Then, the resultant mixture was stirred with the use of a homogenizer, and was then treated twice at 50 MPa with the use of a pressure type dispersing device, so that a coating solution 6 was obtained.

<Production of laminated porous film>

A PE separator base material (air permeability of 160 sec / 100 cc, thickness of 11 μm) was attached to a glass plate, and then a surface (one surface) of the PE separator base material was coated with the coating solution 6 with the use of a bar coater manufactured by Tester Sangyo Co., Ltd. Then, the resultant coated product was placed, for 1 minute, in a humidifying oven having a relative humidity of 80% at 60°C, was washed with the use of ion exchange water, and was then dried with the use of an oven at 80°C, so that a laminated porous film was obtained. Air permeability and thickness of the laminated porous film were 250 sec / 100 cc and 18.6 μm, respectively.

[Comparative Example 2]

<Production of laminated porous film>

A PE separator base material (air permeability of 160 sec / 100 cc, thickness of 11 μm) was attached to a glass plate, and then a surface (one surface) of the PE separator base material was coated with the coating solution 3 with

the use of a bar coater manufactured by Tester Sangyo Co., Ltd. Then, the resultant coated product was placed, for 1 minute, in a humidifying oven having a relative humidity of 80% at 60°C, was washed with the use of ion exchange water, and was then dried with the use of an oven at 80°C, so that a laminated porous film was obtained. Air permeability and thickness of the laminated porous film were 350 sec / 100 cc and 16.3 μm, respectively.

[Conclusion]

Table 1 below summarizes data of each of the laminated porous films produced in respective of Examples and Comparative Examples. The data includes (i) components of a porous layer of the laminated porous film, (ii) a solid content concentration of the coating solution used, and (iii) air permeability and a thickness of the laminated porous film.

[Table 1]

| | Components of porous layer | | | Solid content concentration of coating solution | Physical properties of laminated porous film | |
|---|---|---|---|---|---|---|
| | Polymer A | Polymer B | Filler | | Air permeability | Thickness |
| Example 1 | 100 parts by weight | 100 parts by weight | 200 parts by weight | 5.3% | 200 sec. | 19.9 μm |
| Example 2 | 100 parts by weight | 100 parts by weight | 400 parts by weight | 6.0% | 230 sec. | 19.6 μm |
| Example 3 | 100 parts by weight | 100 parts by weight | 400 parts by weight | 6.0% | 210 sec. | 23.8 μm |
| Example 4 | 100 parts by weight | 100 parts by weight | 400 parts by weight | 6.0% | 230 sec. | 22.8 μm |
| Example 5 | 50 parts by weight | 150 parts by weight | 400 parts by weight | 6.0% | 250 sec. | 18.6 μm |
| Comparative Example 1 | 100 parts by weight | - | 200 parts by weight | 6.0% | 270 sec. | 19.5 μm |
| Comparative Example 2 | 100 parts by weight | - | 200 parts by weight | 6.0% | 350 sec. | 16.3 μm |

The data shown in Table 1 indicates that laminated porous films (laminated separators) produced in Examples are lower in air permeability and superior in ion permeability than/to the laminated porous films produced in Comparative Examples.

Industrial Applicability

A porous layer as described herein and a nonaqueous electrolyte secondary battery laminated separator including the porous layer each have excellent heat resistance and excellent ion permeability, and can each be put to a wide range of use in the field of nonaqueous electrolyte secondary battery production.

## Claims

**1.** A nonaqueous electrolyte secondary battery laminated separator, comprising:

a porous base material containing a polyolefin-based resin as a main component; and
a porous layer which is disposed on at least one surface of the porous base material, wherein
the porous layer comprises:

a nitrogen-containing aromatic polymer A; and
an aromatic polymer B differing in structural unit from the nitrogen-containing aromatic polymer A,

wherein an amount of the aromatic polymer B contained in the porous layer relative to 100 parts by weight of the nitrogen-containing aromatic polymer A contained in the porous layer is 5 parts by weight to 2000 parts by weight.

**2.** The nonaqueous electrolyte secondary battery laminated separator as set forth in claim 1, wherein the nitrogen-containing aromatic polymer A in the porous layer is an aromatic polyamide resin.

**3.** The nonaqueous electrolyte secondary battery laminated separator as set forth in claim 1 or 2, wherein the aromatic polymer B in the porous layer is at least one selected from the group consisting of an aromatic polyamide, an aromatic polyimide, an aromatic polyamide imide, and an aromatic polyester.

**4.** The nonaqueous electrolyte secondary battery laminated separator as set forth in any one of claims 1 through 3, wherein
at least one of the nitrogen-containing aromatic polymer A and the aromatic polymer B in the porous layer is a wholly aromatic polymer.

**5.** The nonaqueous electrolyte secondary battery laminated separator as set forth in any one of claims 1 through 4, the porous layer further comprising:
a filler.

**6.** The nonaqueous electrolyte secondary battery laminated separator as set forth in claim 5, wherein a weight of the filler relative to a total weight of the porous layer is equal to or greater than 20 weight% and equal to or less than 95 weight%.

**7.** The nonaqueous electrolyte secondary battery laminated separator as set forth in any one of claims 1 through 6, wherein the thickness of the porous layer is 0.5 μm to 15 μm.

**8.** A nonaqueous electrolyte secondary battery member, comprising:

a cathode;
a porous layer; and
an anode,
the cathode, the porous layer, and the anode being arranged in this order, wherein
the porous layer comprises:

a nitrogen-containing aromatic polymer A; and
an aromatic polymer B differing in structural unit from the nitrogen-containing aromatic polymer A,

wherein an amount of the aromatic polymer B contained in the porous layer relative to 100 parts by weight of the nitrogen-containing aromatic polymer A contained in the porous layer is 5 parts by weight to 2000 parts by weight.

**9.** A nonaqueous electrolyte secondary battery, comprising the nonaqueous electrolyte secondary battery laminated separator as set forth in any one of claims 1 through 7.

**Patentansprüche**

**1.** Ein laminierter Separator für eine Sekundärbatterie mit nicht-wässrigem Elektrolyt, umfassend:

ein poröses Basismaterial, enthaltend ein Harz auf Polyolefinbasis als einen Hauptbestandteil; und

eine poröse Schicht, welche auf mindestens einer Oberfläche des porösen Basismaterials angeordnet ist, wobei die poröse Schicht umfasst:

ein Stickstoff enthaltendes aromatisches Polymer A; und
ein aromatisches Polymer B, welches sich in der Struktureinheit von dem Stickstoff enthaltenden aromatischen Polymer A unterscheidet,

wobei eine Menge des aromatischen Polymers B, enthalten in der porösen Schicht, bezogen auf 100 Gewichtsteile des Stickstoff enthaltenden aromatischen Polymers A, enthalten in der porösen Schicht, 5 Gewichtsteile bis 2000 Gewichtsteile beträgt.

**2.** Der laminierte Separator für eine Sekundärbatterie mit nicht-wässrigem Elektrolyt wie in Anspruch 1 dargelegt, wobei das Stickstoff enthaltende aromatische Polymer A in der porösen Schicht ein aromatisches Polyamidharz ist.

**3.** Der laminierte Separator für eine Sekundärbatterie mit nicht-wässrigem Elektrolyt wie in Anspruch 1 oder 2 dargelegt, wobei
das aromatische Polymer B in der porösen Schicht mindestens eines ist, ausgewählt aus der Gruppe bestehend aus einem aromatischen Polyamid, einem aromatischen Polyimid, einem aromatischen Polyamidimid und einem aromatischen Polyester.

**4.** Der laminierte Separator für eine Sekundärbatterie mit nicht-wässrigem Elektrolyt wie in einem der Ansprüche 1 bis 3 dargelegt, wobei
mindestens eines des Stickstoff enthaltenden aromatischen Polymers A und des aromatischen Polymers B in der porösen Schicht ein vollaromatisches Polymer ist.

**5.** Der laminierte Separator für eine Sekundärbatterie mit nicht-wässrigem Elektrolyt wie in einem der Ansprüche 1 bis 4 dargelegt, wobei die poröse Schicht ferner umfasst:
einen Füllstoff.

**6.** Der laminierte Separator für eine Sekundärbatterie mit nicht-wässrigem Elektrolyt wie in Anspruch 5 dargelegt, wobei ein Gewicht des Füllstoffes, bezogen auf ein Gesamtgewicht der porösen Schicht, gleich oder größer als 20 Gew.-% und gleich oder kleiner als 95 Gew.-% ist.

**7.** Der laminierte Separator für eine Sekundärbatterie mit nicht-wässrigem Elektrolyt wie in einem der Ansprüche 1 bis 6 dargelegt, wobei die Dicke der porösen Schicht 0,5 $\mu$m bis 15 $\mu$m beträgt.

**8.** Ein Bauelement einer Sekundärbatterie mit nicht-wässrigem Elektrolyt, umfassend:

eine Kathode;
eine poröse Schicht; und
eine Anode,
wobei die Kathode, die poröse Schicht und die Anode in dieser Reihenfolge angeordnet sind, wobei die poröse Schicht umfasst:

ein Stickstoff enthaltendes aromatisches Polymer A; und
ein aromatisches Polymer B, welches sich in der Struktureinheit von dem Stickstoff enthaltenden aromatischen Polymer A unterscheidet,

wobei eine Menge des aromatischen Polymers B, enthalten in der porösen Schicht, bezogen auf 100 Gewichtsteile des Stickstoff enthaltenden aromatischen Polymers A, enthalten in der porösen Schicht, 5 Gewichtsteile bis 2000 Gewichtsteile beträgt.

**9.** Eine Sekundärbatterie mit nicht-wässrigem Elektrolyt, umfassend den laminierten Separator für eine Sekundärbatterie mit nicht-wässrigem Elektrolyt wie in einem der Ansprüche 1 bis 7 dargelegt.

## Revendications

1. Séparateur stratifié pour batterie secondaire à électrolyte non aqueux, comprenant :

   un matériau de base poreux contenant une résine à base de polyoléfine en tant que composant principal ; et
   une couche poreuse qui est disposée sur au moins une surface du matériau de base poreux,
   dans lequel
   la couche poreuse comprend :

      un polymère aromatique azoté A ; et
      un polymère aromatique B dont le motif structurel diffère de celui du polymère aromatique azoté A,

   dans lequel la quantité du polymère aromatique B contenu dans la couche poreuse, pour 100 parties en poids du polymère aromatique azoté A contenu dans la couche poreuse, est de 5 parties en poids à 2 000 parties en poids.

2. Séparateur stratifié pour batterie secondaire à électrolyte non aqueux selon la revendication 1, dans lequel le polymère aromatique azoté A dans la couche poreuse est une résine de polyamide aromatique.

3. Séparateur stratifié pour batterie secondaire à électrolyte non aqueux selon la revendication 1 ou 2, dans lequel le polymère aromatique B dans la couche poreuse est au moins l'un choisi dans le groupe constitué par un polyamide aromatique, un polyimide aromatique, un polyamide-imide aromatique, et un polyester aromatique.

4. Séparateur stratifié pour batterie secondaire à électrolyte non aqueux selon l'une quelconque des revendications 1 à 3, dans lequel au moins l'un parmi le polymère aromatique azoté A et le polymère aromatique B dans la couche poreuse est un polymère entièrement aromatique.

5. Séparateur stratifié pour batterie secondaire à électrolyte non aqueux selon l'une quelconque des revendications 1 à 4, dans lequel la couche poreuse comprend en outre une charge.

6. Séparateur stratifié pour batterie secondaire à électrolyte non aqueux selon la revendication 5, dans lequel le poids de la charge par rapport au poids total de la couche poreuse est égal ou supérieur à 20 % en poids et égal ou inférieur à 95 % en poids.

7. Séparateur stratifié pour batterie secondaire à électrolyte non aqueux selon l'une quelconque des revendications 1 à 6, dans lequel l'épaisseur de la couche poreuse est de 0,5 μm à 15 μm.

8. Elément de batterie secondaire à électrolyte non aqueux comprenant :

   une cathode ;
   une couche poreuse ; et
   une anode,
   la cathode, la couche poreuse et l'anode étant disposées dans cet ordre,
   dans lequel
   la couche poreuse comprend :

      un polymère aromatique azoté A ; et
      un polymère aromatique B dont le motif structurel diffère de celui du polymère aromatique azoté A,

   dans lequel la quantité du polymère aromatique B contenu dans la couche poreuse, pour 100 parties en poids du polymère aromatique azoté A contenu dans la couche poreuse, est de 5 parties en poids à 2 000 parties en poids.

9. Batterie secondaire à électrolyte non aqueux comprenant le séparateur stratifié de batterie secondaire à électrolyte non aqueux tel que défini dans l'une quelconque des revendications 1 à 7.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001023602 A
- JP 2000030686 A
- JP 5476844 B